# EUROPÄISCHE PATENTANMELDUNG

(11) **EP 1 587 206 A2**
(43) Veröffentlichungstag der Anmeldung: **19.10.2005**
(21) Anmeldenummer: 05007829.4
(22) Anmeldetag: 09.04.2005
(51) Int. Cl.: H02K 9/19, F04D 25/06, F04D 29/58

(54) **Hydraulikaggregat**

(30) Priorität: 17.04.2004 DE 202004006109 U
(71) Anmelder: Wagner, Paul-Heinz, 53804 Much-Birrenbachshöhe (DE)
(72) Erfinder: Sittig, Ulf, 51588 Nümbrecht (DE); Andres, Günter, 53804 Much (DE); Thelen, Bernd, 53804 Much (DE); Wagner, Paul-Heinz, 53804 Much-Birrenbachshöhe (DE)
(74) Vertreter: von Kreisler Selting Werner

(57) **Zusammenfassung**

Das Hydraulikaggregat weist ein Reservoir (28) für Öl auf, in dem eine Pumpe angeordnet ist. Der die Pumpe treibende Motor ist ein Synchronmotor mit einem spulenlosen Rotor (17). Im Gehäuse (10) befinden sich Abstandhalter (26) zur Positionierung der Motorwicklung (18). Ein Zusatztank (50) erlaubt eine gezielte Vergrößerung des Reservoirs. Die Motorsteuerung ist in einem außen am Gehäuse vorgesehenen Zusatzgehäuse untergebracht.

## Beschreibung

Die Erfindung betrifft ein Hydraulikaggregat mit einem Öl enthaltenden Reservoir, einer Pumpe und einem die Pumpe treibenden Motor, und insbesondere ein Hydraulikaggregat zur Erzeugung hydraulischen Drucks zur Versorgung eines Verbrauchers.

Ein Hydraulikaggregat weist als Druckerzeuger eine Pumpe auf, die Öl aus einem Reservoir ansaugt und einem Verbraucher zuführt. Von dem Verbraucher führt eine Rücklaufleitung zu dem Reservoir zurück. Bekannt sind Hydraulikaggregate, die den Motor als Tauchmotor enthalten, welcher in dem Reservoir angeordnet und in die Hydraulikflüssigkeit eingetaucht ist. Hierbei wird die im Motor entstehende Wärme durch das Hydrauliköl von dem Motor abgeführt. Wegen der ineinander angeordneten verschiedenen Gehäuse hat ein solches Aggregat ein hohes Gewicht und einen erheblichen Platzbedarf.

Der Erfindung liegt die Aufgabe zugrunde, ein Hydraulikaggregat zu schaffen, das relativ leichtgewichtig ist, wenig Platz beansprucht, so dass es sich insbesondere auch für den mobilen Einsatz eignet.

Das Hydraulikaggregat nach der vorliegenden Erfindung ist durch den Anspruch 1 definiert.

Erfindungsgemäß weist der die Pumpe treibende Motor ein Gehäuse auf, welches zugleich mindestens einen Teil des Reservoirs bildet; der Motor ist ein Synchronmotor, der mit einer Frequenz versorgt wird, welche die Motordrehzahl bestimmt; der Rotor des Motors ist von dem Öl umspült; an der Innenseite des Gehäuses sind Abstandhalter zur Positionierung der Motorwicklung mit radialem Abstand zu dem Gehäuse vorgesehen, derart, dass zwischen Motorwicklung und Gehäuse ein zu dem Reservoir gehörender Raum gebildet ist. Das Motorgehäuse bildet zugleich das Gehäuse des Hydraulikaggregats. Es ist für den aus Stator und Rotor bestehenden Motor zu groß, so dass zwischen Gehäuse und Statorwicklung ein Zwischenraum existiert. Dieser bildet einen Teil des Reservoirvolumens. Der Zwischenraum ist durch Abstandhalter überbrückt, welche die Statorwicklung positionieren. Es ist also nur ein einziges Gehäuse vorhanden, das zugleich das Motorgehäuse und das Reservoirgehäuse bildet. Rotor und Stator des Motors werden unmittelbar von dem Hydrauliköl umspült. Dadurch wird von dem Synchronmotor die Wärme besser abgeführt und die Leistungsdichte des Motors wird erhöht. Der Raum zwischen Stator und Gehäuse bildet einen wesentlichen Teil des Reservoirvolumens.

Die Herstellung des Hydraulikaggregats erfordert mit Ausnahme der Abstandhalter keine Konstruktion zusätzlicher Elemente. Es ist lediglich erforderlich, ein Motorgehäuse zu verwenden, das für den betreffenden Stator zu groß ist. Bei einer Baureihe von Motoren unterschiedlicher Größen wird die Größe des Motorgehäuses einfach zwei Nummern zu groß gewählt. In diesem Fall kann ein Standard-Motorgehäuse benutzt werden.

Wegen des zu großen Motorgehäuses und der verbesserten Kühlung ist auch die erreichbare Motorleistung hoch.

Gemäß einer bevorzugten Weiterbildung der Erfindung weist das Gehäuse an seiner Außenseite Rippen auf, die in Achsrichtung des Motors verlaufen; an einem Ende des Gehäuses ist ein Lüfter vorgesehen, der einen Kühlluftstrom parallel zu den Rippen erzeugt. Der Lüfter kann direkt auf der Motorwelle sitzen oder über ein Getriebe von der Motorwelle angetrieben sein. In diesem Fall ist die Kühlung proportional zur Drehzahl des Motors und somit auch zur Wärmeentwicklung.

Bei einer bevorzugten Ausführungsform der Erfindung ist die Motorwicklung von einem Reif eingefasst, welcher durch die Abstandhalter am Gehäuse abgestützt ist. Der Reif bildet dann einen Stator, der der Motorwicklung die erforderliche Stabilität verleiht.

Die Pumpe des Hydraulikaggregats ist eine Verdrängerpumpe oder volumetrische Pumpe, insbesondere eine Zahnradpumpe. Diese liefert eine Fördermenge an Hydrauliköl, welche durch die Frequenz, mit der der Motor angesteuert wird, vorgegeben ist.

Das erfindungsgemäße Hydraulikaggregat eignet sich insbesondere für die Einpumpentechnik, bei der nur eine einzige Pumpe den gesamten Bereich, in dem der Volumenstrom verändert wird, abdeckt und auch den gesamten Druckbereich, der vom Lastwiderstand abhängt, abdeckt.

Eine bevorzugte Ausgestaltung der Erfindung, die unabhängig von der Ausgestaltung des Motors selbständige Bedeutung hat, sieht vor, dass das Gehäuse Mittel zur Befestigung eines Zusatztanks aufweist, der mit dem Reservoir verbindbar ist. Der Zusatztank ermöglicht es, die hydraulische Kapazität des Hydraulikaggregats zu erhöhen und die Kühlleistung zu vergrößern. Das Reservoir im Inneren des Motorgehäuses ist beispielsweise so ausgelegt, dass die Hydraulikmenge ausreicht, um übliche hydraulische Verschraubungswerkzeuge zu betreiben. Falls mit dem Hydraulikaggregat größere Verbraucher betrieben werden sollen, beispielsweise große Druck- und Hebezylinder, die größere Ölvolumen benötigen, kann das Reservoir durch einen Zusatztank vergrößert werden, der an dem Gehäuse befestigt wird. Vorzugsweise stehen mehrere Zusatztanks unterschiedlicher Größe zur Verfügung, die wahlweise an dem Gehäuse montierbar sind. Auf diese Weise entsteht ein Baukastensystem, wobei der jeweils benötigte Zusatztank ausgewählt werden kann. Andererseits ist es auch möglich, mehrere Zusatztanks parallel zueinander zu montieren.

Durch die Verwendung von Zusatztanks wird für jeden Anwendungsfall und jede Baugröße von hydraulischem Verbraucher das optimale Gewichts-Leistungsverhältnis erreicht. Die Tankgrößen und Ölvolumen können den Einsatzbedingungen angepasst werden. Die Bereitstellungskosten für Hydrauliköl werden verringert. Beliebig viele Werkzeuge oder Zylinder können gleichzeitig betrieben werden, wodurch die Anschaffungs- und Arbeitskosten gesenkt werden.

Gemäß einer bevorzugten Weiterbildung der Erfindung, die ebenfalls von der Ausgestaltung des Motors unabhängig ist, weist das Gehäuse ein Zusatzgehäuse auf, welches eine Motorsteuerung enthält. Die Motorsteuerung ist somit in das Zusatzgehäuse integriert, welches eine Einheit mit dem Aggregat bildet. Das Zusatzgehäuse kann Kühlrippen aufweisen. Somit kann eine aktive Kühlung mittels eingebautem Lüfter erfolgen. Das Zusatzgehäuse kann auch als Träger für den Zusatztank benutzt werden.

Im folgenden werden unter Bezugnahme auf die Zeichnungen Ausführungsbeispiele der Erfindung näher erläutert. Diese Erläuterung dient dem besseren Verständnis der Erfindung, ist jedoch nicht so zu verstehen, dass sie den Schutzbereich der Erfindung einschränkt. Dieser wird vielmehr durch die Patentansprüche und deren Äquivalente bestimmt.

Es zeigen:
- Figur 1: eine schematische perspektivische Darstellung eines Ausführungsbeispiels des Hydraulikaggregats in aufgeschnittenem Zustand, und
- Figur 2: eine perspektivische Ansicht eines zweiten Ausführungsbeispiels des Hydraulikaggregates mit Zusatzgehäuse und Zusatztank.

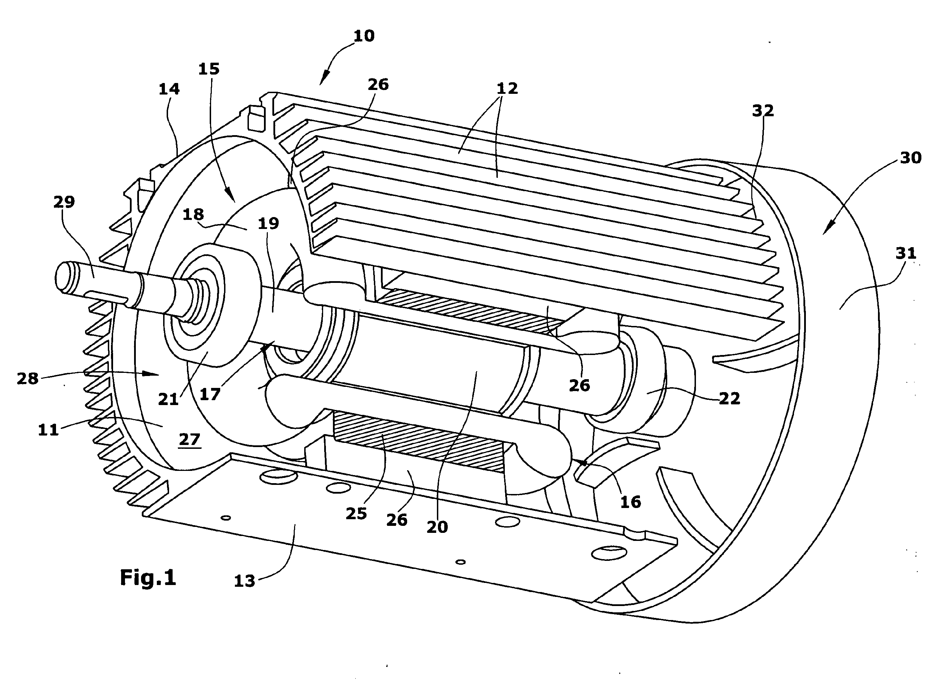

Das Hydraulikaggregat gemäß Figur 1 weist ein Gehäuse 10 auf, bei dem es sich um ein übliches Motorgehäuse eines Elektromotors handelt. Das Gehäuse 10 hat eine zylindrische Innenwand 11 und weist an seiner Außenseite zahlreiche längs verlaufende Rippen 12 auf, welche Kühlrippen bilden. Das Gehäuse 10 bildet einen Profilkörper aus einem Strangpressprofil. Es ist an einer Stelle seines Umfangs mit einer angeformten längslaufenden Montageplatte 13 versehen und an der diametral gegenüberliegenden Seite befindet sich ein Befestigungsprofil 14 zur Anbringung von Komponenten an dem Gehäuse.

Das Gehäuse 10 enthält den Elektromotor 15. Dieser besteht aus einem Stator 16 und einem Rotor 17. Der Motor ist ein permanentmagnet-erregter Synchronmotor, dessen Stator eine drehfelderzeugende Spulenwicklung 18 aufweist. Der Rotor 17 besteht aus der Motorwelle 19 und daran befestigten Permanentmagneten 20. Die Motorwelle 19 ist in Lagern 21, 22 in den (nicht dargestellten) Stirnwänden des Gehäuses 10 gelagert.

Die Spulenwicklung 18 ist mit einem Reif 25 eingefasst, der einen geschlossenen Ring bildet und die Spulenwicklung umgibt. An der zylindrischen Innenwand 11 des Gehäuses 10 sind Abstandhalter 26 befestigt, welche radial nach innen abstehen und den Reif 25 im Gehäuse zentriert halten. Auf diese Weise wird der Rotor 17 im Gehäuse zentriert. Die Abstandhalter 26 sind Leisten, die in Längsrichtung des Gehäuses verlaufen. Mindestens sind drei derartiger Leisten vorgesehen, bei dem vorliegenden Ausführungsbeispiel jedoch 4. Die Abstandhalter 26 sind kürzer als die axiale Länge des Raumes 27, so dass sie die Zirkulation des Hydrauliköls in dem Raum 27 nicht behindern.

Durch die Abstandhalter 26 wird erreicht, dass zwischen dem Stator 16 und der Innenfläche 11 des Gehäuses ein ringförmiger Raum 27 vorhanden ist, der den Hauptteil des Volumens eines Reservoirs 28 bildet. Das Reservoir wird durch das Gehäuse 10 begrenzt. Der Stator 16 und der Rotor 17 befinden sich eingetaucht in der Hydraulikflüssigkeit.

Die Welle 19 des Motors 15 weist einen Wellenstumpf 29 auf, der eine (nicht dargestellte) Pumpe antreibt. Der Saugeinlass der Pumpe ist über eine Hydraulikleitung mit dem Reservoir 28 verbunden.

An dem gegenüberliegenden Ende des Gehäuses 10 befindet sich ein Lüfter 30, der ein Gehäuse 31 aufweist, welches radial über das Gehäuse übersteht. In dem Gehäuse 31 rotiert ein Lüfterrad, welches einen Luftstrom 32 entlang der Rippen 12 erzeugt. Das Lüfterrad ist mit der Welle 19 verbunden und wird durch diese angetrieben. Wegen der effektiven Wärmeabfuhr ergibt sich eine gute Kühlung. Infolge der geringen Erwärmung des Hydraulikaggregats erhöht sich auch der Wirkungsgrad. Wegen des Verzichts auf ein separates Motorgehäuse ist das Hydraulikaggregat von kompakter Bauform und von geringem Gewicht.

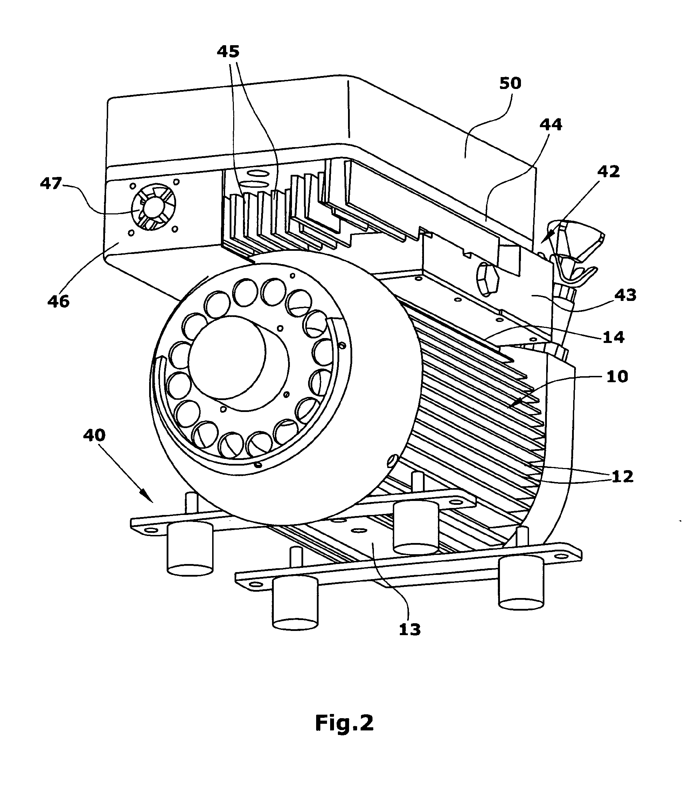

Bei dem Ausführungsbeispiel der Figur 2 entspricht der innere Aufbau des Hydraulikaggregats demjenigen von Figur 1. Das Gehäuse 10 ist an einem Gestell 40 befestigt, von welchem aus Gründen der Übersichtlichkeit nur die Füße sichtbar sind. Das Gestell weist einen (nicht dargestellten) Tragbügel auf, um das Aggregat transportieren zu können.

Auf dem Befestigungsprofil 14, d.h. auf der Oberseite des Gehäuses 10, befindet sich ein Zusatzgehäuse 42, welches aus einem Gehäuseblock 43 und einer Gehäuseplatte 44 besteht. Das Zusatzgehäuse 42 enthält die Motorsteuerung. Unter der Gehäuseplatte 44 befinden sich Kühlrippen 45. Außerdem ist unter der Gehäuseplatte 44 eine Abdeckung 46 montiert, welche die Kühlrippen umschließt. Die Abdeckung 46 enthält eine Lüftungsöffnung, in der ein Lüfter 47 angeordnet ist, um Luft entlang der Kühlrippen 45 zu bewegen. Auf diese Weise erfolgt eine Kühlung des Zusatzgehäuses 42 und der Motorsteuerung.

Das Gehäuse 10 bzw. das Zusatzgehäuse 42 weist Mittel zur Befestigung eines Zusatztanks 50 auf. Diese Mittel bestehen bei dem vorliegenden Ausführungsbeispiel aus der Gehäuseplatte 44, auf der der Zusatztank 50 montiert ist. Der Zusatztank ist im Wesentlichen deckungsgleich mit dem Zusatzgehäuse 42. Er ist mit Schlauchanschlüssen versehen, die mit dem Reservoir des Gehäuses 10 verbunden sind, so dass der Zusatztank das Reservoir vergrößert. Es können Zusatztanks unterschiedlicher Größe vorgesehen sein, die wahlweise an dem Gehäuse 10 montierbar sind.

## Patentansprüche

1. Hydraulikaggregat mit einem Öl enthaltenden Reservoir (28), einer Pumpe und einem die Pumpe treibenden elektrischen Synchronmotor (15), der einen Stator (16) mit Spulen und einen spulenlosen Rotor (17) mit Magneten (20) aufweist, wobei der Synchronmotor ein Gehäuse (10) aufweist, welches zugleich mindestens einen Teil des Reservoirs (28) bildet, und der Rotor (17) des Motors (15) von dem Öl umspült ist, und mit im Gehäuse (10) vorgesehenen Abstandhaltern (26) zur Positionierung der Motorwicklung (18) mit radialem Abstand zu dem Gehäuse (10) derart, dass zwischen Motorwicklung (18) und Gehäuse (10) ein zu dem Reservoir (28) gehörender Raum (27) gebildet ist.

2. Hydraulikaggregat nach Anspruch 1, **dadurch gekennzeichnet, dass** das Gehäuse (10) an seiner Außenseite Rippen (12) aufweist, die in Achsrichtung des Motors (15) verlaufen, und dass an einem Ende des Gehäuses ein Lüfter (30) vorgesehen ist, der radial über das Gehäuse vorsteht und einen Kühlluftstrom (32) entlang der Rippen (12) erzeugt.

3. Hydraulikaggregat nach Anspruch 1 oder 2, **dadurch gekennzeichnet, dass** die Motorwicklung (18) von einem Reif (25) eingefasst ist, welcher durch die Abstandhalter (26) am Gehäuse (10) abgestützt ist.

4. Hydraulikaggregat nach einem der Ansprüche 1-3, **dadurch gekennzeichnet, dass** das Gehäuse (10) aus einem Profilkörper besteht, dessen Enden durch Stirnwände verschlossen sind.

5. Hydraulikaggregat nach einem der Ansprüche 1-4, **dadurch gekennzeichnet, dass** der Raum (27) sich über die gesamte Länge des Gehäuses (10) erstreckt.

6. Hydraulikaggregat, insbesondere nach einem der Ansprüche 1-5, **dadurch gekennzeichnet, dass** das Gehäuse (10) Mittel zur Befestigung eines Zusatztanks (50) aufweist, der mit dem Reservoir (28) verbindbar ist.

7. Hydraulikaggregat nach Anspruch 6, **dadurch gekennzeichnet, dass** mehrere Zusatztanks (50) unterschiedlicher Größe vorgesehen sind, die wahlweise an dem Gehäuse (10) montierbar sind.

8. Hydraulikaggregat, insbesondere nach einem der Ansprüche 1-7, **dadurch gekennzeichnet, dass** das Gehäuse (10) ein Zusatzgehäuse (42) aufweist, welches eine Motorsteuerung enthält.

9. Hydraulikaggregat nach Anspruch 7 oder 8, **dadurch gekennzeichnet, dass** das Zusatzgehäuse (42) eine Platte (44) mit Kühlrippen (45) aufweist.
